Europäisches Patentamt

European Patent Office

Office européen des brevets

(19)

(11) Publication number: **0 056 790**
**A1**

(12) # EUROPEAN PATENT APPLICATION

(21) Application number: **82830001.2**

(22) Date of filing: **05.01.82**

(51) Int. Cl.³: **B 65 B 35/58**
**A 23 N 3/00**

(30) Priority: **20.01.81 IT 330981**

(43) Date of publication of application:
**28.07.82 Bulletin 82/30**

(84) Designated Contracting States:
**DE FR GB**

(71) Applicant: **COMECO Cooperativa Meccanica Conselice
Società Cooperativa a responsabilità Limitata
Via Amendola
I-48017 Conselice (Ravenna)(IT)**

(72) Inventor: **Vassura, Gabriele
Corso Garibaldi, 50
I-48018 Faenza (Ravenna)(IT)**

(74) Representative: **Lanzoni, Luciano
c/o BUGNION S.p.A. Via Farini, 37
I-40124 Bologna(IT)**

(54) Apparatus for automatically orientating fruit, particularly peaches, in machines for the automatic packing thereof.

(57) In an apparatus that is able to orientate a plurality of fruit, particularly peaches, supplied in succession to a machine for the automatic packing thereof in special trays, there is a charging-separating device 50 that infeeds the fruit P, previously selected by size, in a continuous succession to a first station 60 at which the fruit is orientated with the peduncular cavity 3 pointing downwards and the line of suture 4 thereof lying on the plane of motion; the said station being constituted by a pair of inclined rollers 12 that rotate in the same direction at regular intervals, in between which slide a plurality of means 13, connected to a driven chain 14, provided to support the fruit; subsequently, at a second station 70 constituted by optical electronic means, the most coloured part of the fruit is recognized, while at a third station 80 the fruit undergoes a 90° rotation clockwise or anti-clockwise with respect to the vertical axis thereof so that the most coloured part be pointing in the direction of motion.

./...

FIG 4

Apparatus for automatically orientating fruit, particularly
peaches, in machines for the automatic packing thereof

In the fruit packing field, particular importance is given
to the packing of peaches which, after having been selected
by size, are placed (especially for certain foreign markets)
in special containers constituted by a support, generally
made of a plastic material, that is provided with a number
of pockets and is placed in the inside of a tray.

The fruit can be arranged, inside each pocket, in two different ways to meet the requirements, namely:

- like a plant that is flowering; that is to say, each item
  of fruit has to be placed in the pocket in such a way as
  to have the peduncular cavity pointing towards the base of
  the tray, and thus with the opposite polar area visible,
  while the line of suture thereof has to be orientated in a
  predetermined direction, or;

- lying on one side; in other words, each item of fruit has
  to be so placed that the line of suture thereof be on a
  plane parallel to the base of the tray, with the peduncular cavity pointing in a given direction, and with the
  fruit displaying at the top the part of the surface that
  has, from a commercial point of view, the most interesting
  colouring, this being constituted in general by the reddest
  part.

At the present time, the packing of peaches in one or the
other of the two above mentioned forms is done manually with
the fruit placed in bulk once the peaches have been graded
by size.

Currently only in stoning machines are apparatus or automatic devices for orientating the peaches to be found and
these, with which it is solely possible to achieve the
"plant flowering" configuration, are constituted by a plurality of vibrating cups provided, in the region of the base thereof, with a projecting·part that constitutes the centering element into which the peduncular cavity is inserted.

As an alternative to aforementioned solution, the fruit is again contained in cups inside which, in the region of the base thereof, there is a spindle virtually tangential with the spherical surface of the cup and this is provided with a protruberance (rotatable there with) that follows the peduncular cavity. When in contact with the spindle, the peach is made to rotate up until the time when the peduncular cavity is located in the region of the said protruberance and, in this way, the peach is centered.

The problem that arises with the methods referred to above consists in the fact that although the fruit is indeed centered with respect to the peduncular cavity thereof, it is not always orientated with respect thereto; that is to say, the correct orientation percentage is somewhat restricted, just as the number, percentage wise, of centered peaches is not very high, and this is not acceptable in an orientation device placed upstream of an automatic packing machine.

The essential object of the invention is, therefore, to overcome the problem outlined above through the creation of an apparatus that is able to allow the fruit to be automatically orientated either with it arranged in the "plant flowering" configuration or prepared to be placed "lying on one side"; in the latter instance, with the most colourful part thereof orientated, for all the fruit, in the same direction; all this being done with a very high percentage of fruit centered and orientated by an apparatus that is suited particularly to be placed upstream of an automatic packing machine, and using technical methods that are extremely simple construction wise and, for this very reason, are inexpensive.

This and other objects too are all attained with the apparatus according to the invention which is characterized by the fact that it comprises : a charging-separating device which supplies the fruit, previously selected by size, in a continuous succession, to a first fruit orientation station where the peduncular cavity thereof is pointed downwards, the said first station being constituted by a pair of parallel axis rollers which, with respect to the horizontal plane, slope downwards in the motion direction of the fruit and define, one at the side of the other, a housing for containing and rolling the fruit, the said first station comprising, moreover, a plurality of means, connected to at least one endless chain, for orientating the fruit, that are placed in between the said rollers and are movable parallel thereto at a constant speed in the direction in which the fruit rolls, each of the said means comprising a support connected to the said chain, to which is vertically pivoted a locator member designed to accept the peduncular cavity of the fruit and provided with a shoulder piece placed, with respect to the traversing motion of the said means, downstream with respect to the former, the purpose of this being to withhold the fruit; a second station for recognizing the most coloured part of the fruit, placed, with respect to the advancement motion of the said means, downstream with respect to the first station, along the path followed by the chain and able to effect the recognition as the fruit passes on the means below; and a third station for the identical orientation of the fruit, placed downstream with respect to the prior mentioned stations, along the path followed by the said chain, comprising a flat cam that extends beneath the said supports and is provided with at least two grooves in which engages a tail piece integral with the said locator member, the said cam being provided at the front with respect to the advancement motion of the fruit, with a routing device, operated by the said recognition station, designed to move the said tail piece into one or the other of the said grooves and, consequently, to cause the locator member and the fruit to undergo a 90° rotation clockwise or anti-clockwise around the vertical polar axis thereof.

In one preferred form of embodiment, the said apparatus is characterized, furthermore, by the fact that the rollers in the said first station are provided with an intermittent drive in the same direction of rotation.

Further characteristics and advantages of the apparatus in question will become more apparent from the detailed description that follows of one preferred form of embodiment, illustrated purely as an unlimited example on the accompanying drawings, in which :

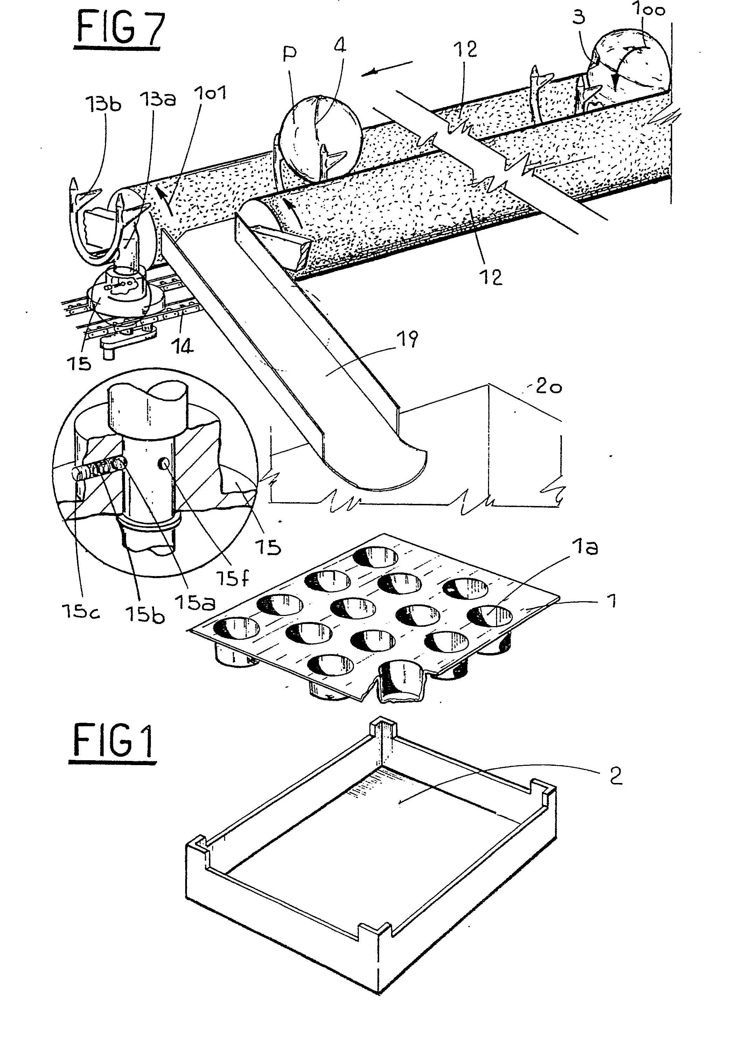

- Figure 1 is a diagrammatic perspective view of the container for the packing of the fruit;
- Figures 2 and 3 are diagrammatic views of the positions adopted by the fruit in the "plant flowering" and the "lying on one side" configuration, respectively;
- Figure 4 is a lateral diagrammatic view of the apparatus in question;
- Figure 5 is a lateral diagrammatic view of the charging-separating device for the infeeding of the fruit;
- Figure 6 is a diagrammatic perspective view of one lifting assembly of the device illustrated in Figure 5;
- Figure 7 is a diagrammatic perspective view of the first orientation station of the apparatus in question;
- Figure 8 is a lateral diagrammatic view of the said first station during the various fruit orientation stages effected by the underneath orientation means;
- Figure 9 is a lateral diagrammatic view, with certain parts removed and others in sectional form, of the second station of the apparatus in question;

- Figure 10 is a view, along the line 10-10, in the preceding figure, of the second station;

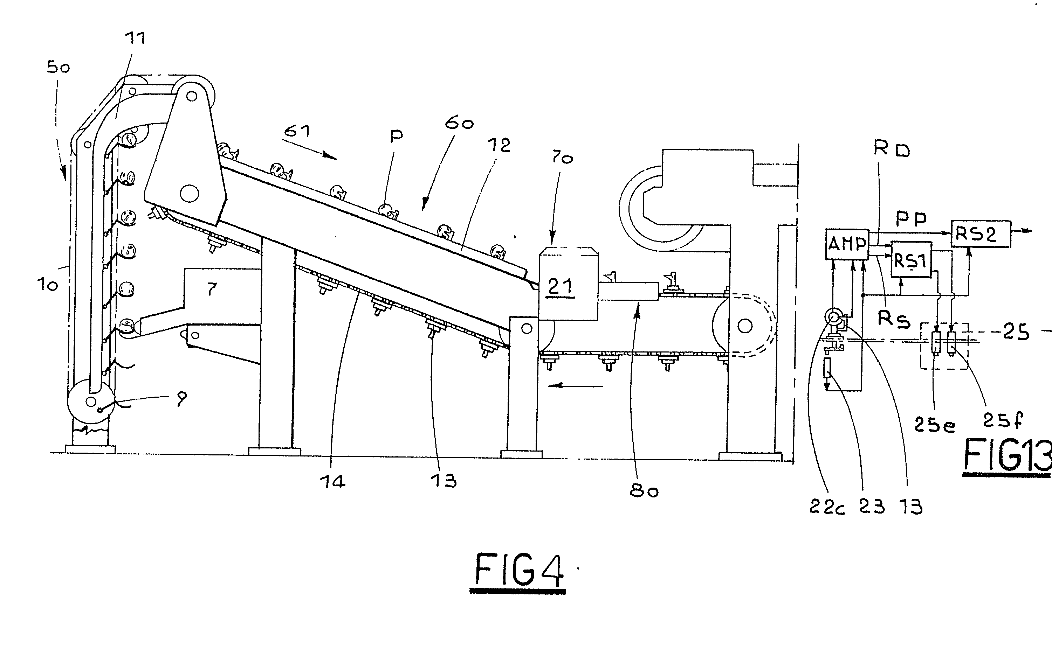

- Figures 11 and 12 are a diagrammatic perspective view of the third station and a plan view of the relevant switching device, respectively;

- Figure 13 is a diagram of the connections between the various components and actuators of the apparatus in question.

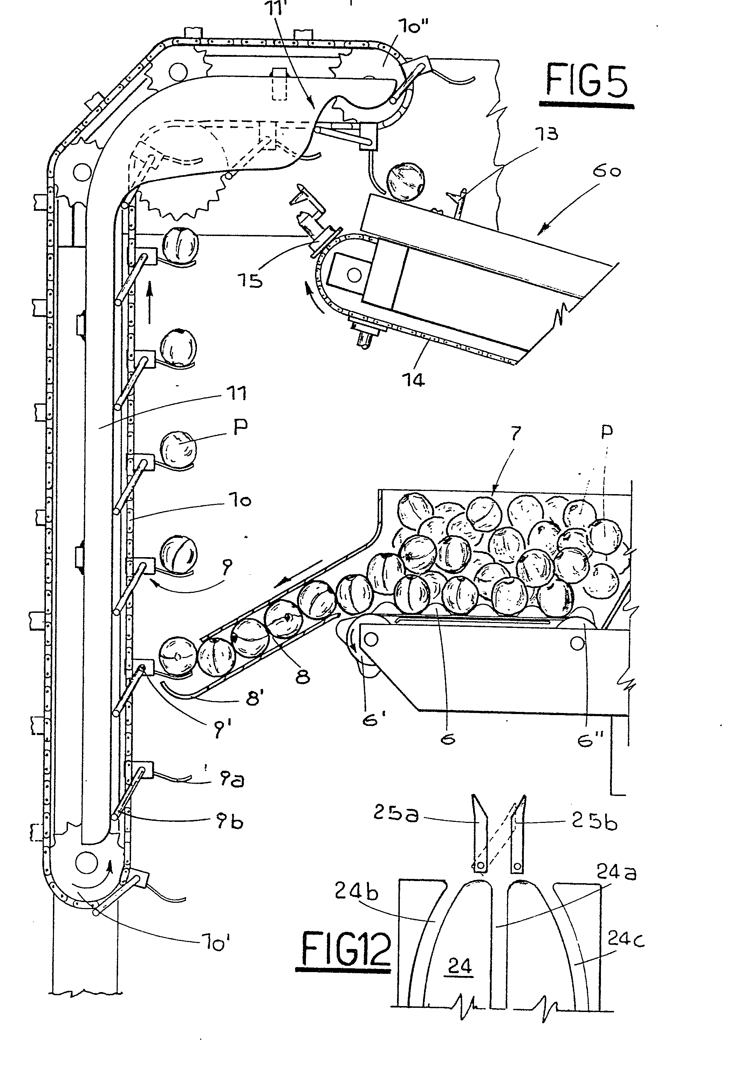

With reference to the accompanying figures and, in particular, to Figure 4, an examination will now be made of the apparatus forming the subject of the invention which is essentially provided, one in line with the other, with a fruit charging-separating device shown globally at 50, with a first orientation station shown at 60, with a second station for the recognition of the most coloured part of the fruit, shown at 70, and with a third station for the identical orientation of the fruit, shown in the figure at 80.

The function of the charging-separating device, which is illustrated more amply in Figure 5, is to infeed the fruit (although hereinafter mention will be made solely of peaches, the explanation that follows could equally be applied to other types of fruit such as, for example, apples) from a bulk charging hopper, shown at 7, to the said first orientation station 60.

The peaches P, previously graded by size at stations located upstream, not shown in the figure but of a known type, are thus loaded into the inside of the hopper 7, or else are continuously infed through the medium of other systems, and are carried, with the aid of a suitably shaped endless belt 6 mounted on end drums 6' and 6", into a grouping channel 8 that slopes downwards in the motion direction of the peaches and ends in a locator, or rather a support, member 8' whose conformation is appropriately curvilinear, on which each peach settles itself. The peaches are then picked up, one at a time, by the lifting forks 9 that intercalate with the aforementioned support member 8', each connected to a chain 10, also mounted in an endless fashion around end drums 10' and 10", movable along an initially vertical path that subsequently slopes until a virtually upside down L has been defined and terminates in the region of the summit of the said first station 60.

Each fork is pivoted, in an almost central position 9', to the said chain 10 and is provided with a tail piece 9a whose conformation is also curvilinear, on which the peach to be raised rests, and with a tail piece 9b envisaged to remain in sliding contact with a corresponding cam 11 that virtually extends over the full path of the said device and whose profile defines the movements of the said forks 9. This means that in the region of the vertical section of the said cam, it is the weight itself of the peach on the tail piece 9a that determines the constant contact of the other tail piece 9b with the cam, while in the region of the depositing area of the said peach at the said first station, the gradual downward overturning of the fork is controlled by the special profile 11' of the cam, and this softens the depositing of the peach and the impact thereof with the underneath rollers of the said station 60.

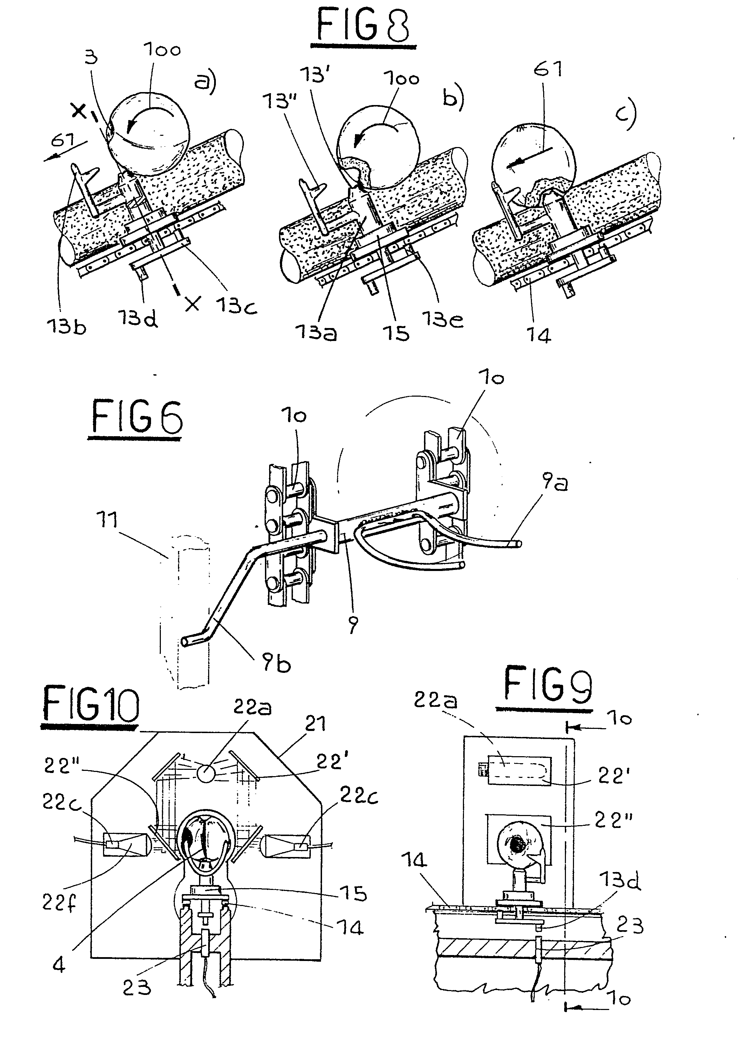

Once the fruit has been deposited, each fork, whose particular conformation can be seen in Figure 6, connected to the corresponding chain 10, passes through the return bifurcation thereof until it is back again in the lowermost position where, on account of its own weight, the fork is ready and appropriately positioned to receive another peach to be raised, as illustrated in Figure 5.

The said first station 60 is essentially constituted by a pair of cylindrical rollers 12, preferably with a soft rubber facing, placed on axes parallel one sith the other and inclined at a certain angle with respect to the horizontal plane and downwards with respect to the direction, shown at 61, in which the peaches move forward. The said arrangement, namely with the rollers parallel and side by side, defines a containment housing for the peach (as can be seen in Figure 7) which can thus roll spontaneously, under the action of gravity, resting on the external surfaces of the said rollers.

The free rolling movement of the peach is contrasted by a number of orientation means 13 located in the space that exists in between the two rollers 12, each of which connected, through a support 15, to a corresponding chain 14 whose upper bifurcation extends in the region of the said rollers, over the full length thereof, parallel thereto. As will be seen better in due course, the said chain 14, that extends also into the region of the said second station 70 and third station 80, is also mounted in an endless rotatable fashion around end drums, these too on horizontal axes and, spread out uniformly over the full length thereof, it is provided with a number of the said orientation means 13 that are inter-spaced at a constant pitch and are timed to suit the movement of the charging-separating device 50 upstream thereof.

Each of the said orientation means 13, which individually attend to the orientation of one single peach, is constituted by a locator member 13a, pivoted vertically to the said support 15 around an axis x-x, elliptical in shape when viewed in sectional form, the purpose of which is to accept the peduncular cavity 3 of the peach to be orientated. The said member 13a is, moreover, provided with a support shoulder 13b integral there with, placed downstream thereof with respect to the traversing motion direction 61 of the said orientation means, and provided to withhold the peach once it has been penetrated, that is to say, once the peduncular cavity 3 has mated with the said locator member 13a. The latter, pivoted as stated to the corresponding support 15, is provided underneath with a transverse arm 13c, perpendicular to the aforementioned axis x-x, on the extremities of which there are, on opposite sides, two pins, 13e and 13d, respectively, whose purpose and operation will be seen more clearly hereinafter. The free rotation of the said locator member 13a around the said support 15 is contrasted by a curbing device constituted by a ball 15a, thrust by a spring 15b, pre-loaded by a grub screw 15c that exerts an effect on a number of cavities 15f machined into the shaft connecting the said locator member to the said support; in this way, three stable positions of the locator member 13a-shoulder 13b assembly are defined around the relevant axis x-x, namely the one illustrated in Figure 7 and those rotated, with respect to the said configuration, 90° clockwise or anti-clockwise, as will be seen better below.

The locator member 13a thus serves to control the rolling of the peach on the underneath rollers when this contact occurs on a meridian of the surface of the peach where the peduncular cavity is not contained; in the said case, the peach simply rolls on the rollers, resting at the front on the member 13a on which it slides (Figure 8a), with the latter acting in this way as an abutment member for checking the motion of the peach.

If, during this first complete rotation of the peach, the peduncular cavity thereof were not to be contained in the line of contact, or it is wished that the contact between the peach and the locator member 13a be, sooner or later, on the meridian containing the peduncular cavity 3, it is necessary to cause the peach to also be rotated in a plane perpendicular to that of the prior rolling, shown at 100, for determinate periods of time and at small angles, in a crosswise direction, as shown in Figure 7 at 101.

To do this, it is sufficient to give the rollers 12 a contemporaneous, equidirectional and intermittent rotation, the entity and frequency of which can be established in accordance with the operating parameters so that the rotation may take place once the contact between the peach and the locator member 13a has explored in its entirety each meridian. When the locator member 13a is in front of the peduncular cavity, an alteration occurs in the conditions of equilibrium of the peach since the locator member becomes inefficient as a restraint and the peach tends to engage therein and to pass there over, this movement being halted by the action of the shoulder 13b which stops the motion of the peach once it has engaged with the peak of the locator member 13a (see Figures 8b and 8c).

The height of the locator member 13a is chosen suitably to obtain a final position that corresponds to the one depicted in Figure 8c, in which the peach is raised slightly from the rollers 12 and is unaffected by further rotations of these.

In this position, furthermore, a condition of stability is experienced since the centre of gravity falls within the projections of the support points. In addition the locator member 13a is shaped in a special way in order to obtain two separate supplementary effects : the lenticular section thereof encourages the orientation of the plane of the line of suture 4 making full use of the fact that the peduncular cavity 3 extends mainly along the said plane, in such a way, therefore, that in the configuration shown in Figure 8c, the said plane of the line of suture coincides with the plane in the figure; furthermore, the profile of the said locator member 13a is provided at the top with a concavity 13' which guarantees the orientation possibility of the peach even in the presence of the peduncle.

The shoulder 13b has a pair of lateral projections 13" designed to support the peach at the time the complete orientation means 13 are made to rotate around their own axis x-x with respect to the underneath support 15. The peaches P thus leave the said first station 60 orientated essentially in their "plant flowering" configuration, with the plane of the line of suture arranged similarly, one with respect to the other. Any fruit that has not been orientated, namely peaches that were not resting on the means 13, roll spontaneously along a chute 19 placed downstream of the said rollers 12, which channels the peaches into an especially provided container 20 whence they are normally returned to the charging hopper 7 (see Figure 7).

The identical intermittent rotation of the rollers 12 can be achieved, for example, by taking the movement from the chain 14 and passing it on to the said rollers 12 via a device of mechanical intermittent type that can be set to suit the required, non-illustrated, pitches.

The orientation means 13 (with or without peaches orientated there above), connected to the chain 14, then move (see Figures 4 and 9) into the region of the second station of the apparatus in question , constituted virtually by a tunnel 21 inside which is housed the system for the recognition of the most coloured part of the peach which, in brief, consists of a monochromatic, prefereably red coloured, light 22a which, through mirrors 22' and 22", the latter semi reflecting, illuminates the two lateral faces of the peach P with respect to the vertical plane in which the line of suture 4 lies.

Bilaterally to the passage area of the fruit are placed two photoelectric sensors 22c which, through the said semi reflecting mirrors 22" and a system of lenses 22f, take note of the signal emitted by the source of light 22a corresponding to an impulse of synchronism given, for example, by a proximity switch 23 that signals the passing of the means 13 and thus of the fruit.

The illumination of the fruit with a red light has the effect that the two opposite faces of the peach adopt two completely different colourings, the most coloured part becoming white and the greener part, black. This difference is noted by the two sensors 22c which, through a normal signal processing and amplification system, actuate at an appropriate moment, in time with the said "reading", a mechanical system that is located downstream of the said second station and forms an integral part of the said third orientation station shown globally at 80.

The latter is essentially constituted by a flat three-way, or triple groove, cam 24 that extends along virtually the horizontal path of the said chain 14, with the three grooves of which the pin 13d integral with the arm 13c of each of the orientation means 13 can engage. More precisely, the first groove 24a runs in the centre, namely in the region of the path followed by vertical spindle of the means 13, while the other two grooves, 24b and 24c, except for a first connecting part 24f, extend a distance $d$ away from the said first groove that corresponds to the centre line existing between the pin 13d and the vertical spindle of the orientation means 13.

Therefore, the pin 13d will take the centre groove 24a, on the right or on the left depending upon the operation of a routing device, shown globally at 25, placed to the front of the said cam with respect to the direction in which the peaches move forward supported by the underneath orientation means, shown at 61.

The aforementioned routing device 25 is constituted by two symmetrical switching means, 25a and 25b, movable around corresponding vertical pins 25c and 25d, respectively, under the action of, for example, two electromagnets 25e and 25f which are directly controlled by the preceding second colour recognition station. More precisely, with the operation of the electromagnet 25e, the insertion is caused of the pin 13d into the inside of the groove 24b (see in this connection Figure 12) and, in consequence, the rotation of the complete orientation means 13 around their own vertical axis x-x in a clockwise direction.

Vice versa, the operation of the electromagnet 25f brings about a rotation of the complete means and, consequently, of the fruit supported, by 90°, in an anti-clockwise direction, the said rotation being controlled, as stated, by the preceding recognition station in such a way that when leaving the said third station, all the peaches be orientated with the most colourful part thereof arranged in the same direction; for example, placed to the front with respect to the advancement direction of the fruit.

When the orientation means 13 arrive at the exit of the said third station 80, the peaches are taken into possession by a special apparatus that is not illustrated but attends to the packing thereof, while the orientation means are returned to their original configuration, namely with the pin 13d placed to the front with respect to the direction in which the said means move forward, under the action of a second cam constituted by the two parts 26a and 26b, against which abuts the second pin 13e integral with the said arm 13c of the relevant orientation means 13, the said cam parts 26a and 26b being positioned at any point of the return bifurcation of the chain 14.

The central groove 24a in the cam 24 is utilized in cases when the "plant flowering" configuration of the fruit is required, or in the event of there being no peach on the means 13, this being noted by the lack of a difference in the "readings" on the part of the photoelectric sensors 22c.

With the apparatus according to the invention, the objects to which prior reference has been made are attained, particularly as regards the possibility of achieving both the "plant flowering" configuration for the fruit, in which case the second and third stations are not brought into use, and the orientation, or rather the preparation for the "lying on one side" configuration of the fruit, using for this the entire apparatus in question, inclusive therefore, of the said second and third stations.

Furthermore, the extremely simple way in which the first orientation station 60 has been designed makes it possible for the means 13 concerned to lay hold of a high percentage of fruit, which can be quantified as being around 80 - 90%, that is to say, a value that is particularly satisfactory for an apparatus positioned upstream of a fruit packing machine.

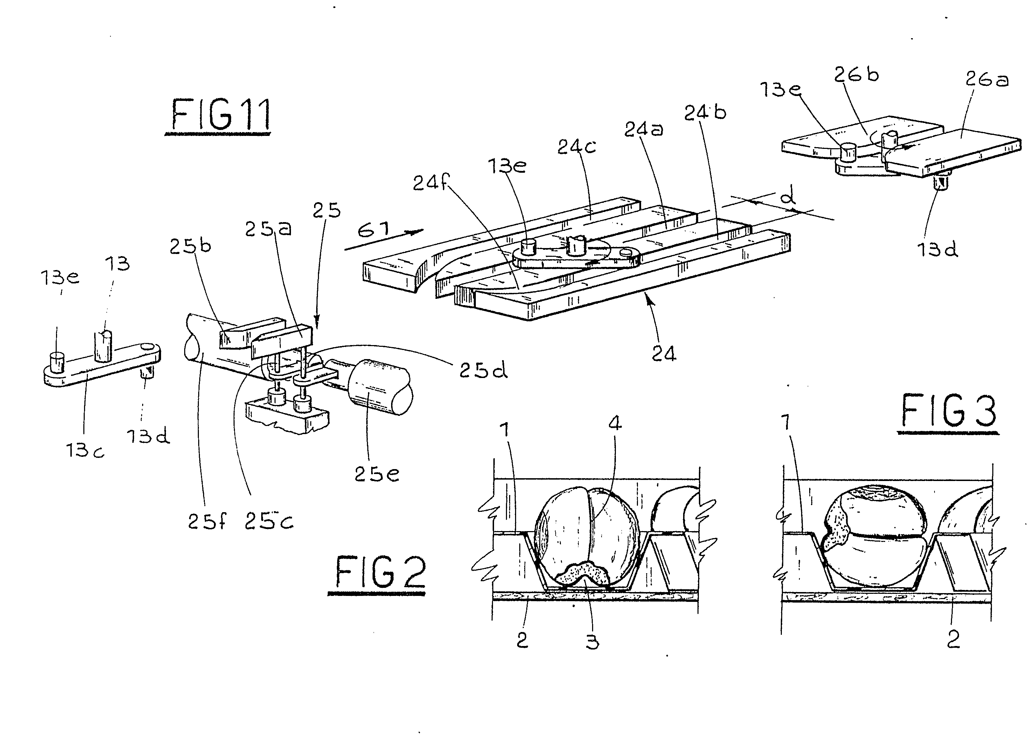

A diagram of the connections between the various components and actuators of the apparatus in question is given in Figure 3.

As each peach orientation means pass in the region of the proximity switch 23, the amplification system AMP connected thereto emits, based on the response of the sensors 22c, three possible signals, namely : $R_D$, $R_S$ or PP.

$R_D$ implies the need for the peach to be rotated clockwise, $R_S$ for anti-clockwise rotation, and PP indicates whether or not a peach is present. These signals are, in common with all the others on the machine apart from those of the photoelectric sensors 22c, of the logic type or, in other words, of the all or nothing type.

Through a first shift register $RS_1$, the signals $R_D$ and $R_S$ are transferred to the corresponding electromagnets 25e or 25f.

The synchronizing signal is still constituted by the impulse of the proximity switch 23 : in this way it is possible to route the data through the shift register and to utilize it when the peach in question has been displaced by a corresponding number of pitches, that is to say, in the proximity of the routing device 25.

For the "plant flowering" configuration, the signals $R_D$ and $R_S$ are useless, and the generation is activated only of the signal PP.

The latter, resulting from the difference in the signals of the sensors 22c, indicates that there is a peach present (alternatively, the signal is 0). The signal PP is then transferred to a second shift register $RS_2$ and thence to the assemblies belonging to the packing machine placed downstream that takes the peach into possession from the means 13.

In the practical form of embodiment thereof, the apparatus according to the invention can adopt forms that differ from the foregoing description and, in particular, numerous modifications of a practical nature may be made to the constructional details without, in any way, deviating from the framework of protection afforded to the invention as claimed below.

Claims:

1.    Apparatus for automatically orientating fruit, particularly peaches, in machines for the automatic packing thereof, characterized by the fact that it comprises :
a charging-separating device 50 which supplies the fruit P, previously selected by size, in a continuous succession, to a first fruit orientation station 60 where the peduncular cavity 3 thereof is pointed downwards, the said first station being constituted by a pair of parallel axis rollers 12 which, with respect to the horizontal plane, slope downwards in the motion direction of the fruit and define, one at the side of the other, a housing for containing and rolling the fruit, the said first station comprising, moreover, a plurality of means 13, connected to at least one endless chain 14, for orientating the fruit that are placed in between the said rollers  and are movable parallel thereto at a constant speed in the direction in which the fruit rolls, each of the said means comprising a support 15 connected to the said chain, to which is vertically pivoted a locator member 13a designed to accept the peduncular cavity of the fruit and provided with a shoulder piece 13b placed, with respect to the traversing motion of the said means, downstream with respect to the former, the purpose of this being to withhold the fruit;  a second station 7o for recognizing the most coloured part of the fruit placed, with respect to the advancement motion of the said means, downstream with respect to the first station, along the path followed by the chain 14, and able to effect the recognition as a fruit passes on the means below;  and a third station 80 for the identical orientation of the fruit, placed downstream with respect to the prior mentioned stations, along the path followed by the said chain 14, comprising a flat cam 24 that extends beneath the said supports and is provided with at least two grooves 24a-24b in which engages a tail piece 13d integral with the said locator member 13a, the said cam being provided, at the front with respect to the advancement motion of the fruit, with a routing device 25, operated by the said recognition station, designed to move the said tail piece into one or the other of the said grooves and, consequently, to cause the locator member to undergo a 90° rotation clockwise or anti-clockwise around the vertical polar axis thereof.

2. Apparatus according to the preceding claim, wherein the said rollers 12 of the said first station are provided with an intermittent drive in the same direction of rotation.

3. Apparatus according to Claim 1, wherein the said locator member 13a is of lenticular conformation, when viewed in sectional form, and has, at the top, a concavity 13' provided for the containment of the peduncle of the peach; the said shoulder piece 13b being virtually of "U" shape, integral with the preceding locator member 13a and provided with lateral projections 13" designed to laterally support the fruit.

4. Apparatus according to Claim 1, wherein the said orientation means 13, pivoted to the corresponding support 15 and rotatable around a vertical axis, have underneath a transverse arm 13c, perpendicular to the said axis, the extremities of which are provided with the said tail piece 13d that can be coupled to the said cam 24 of the said third station.

5. Apparatus according to the preceding claim, wherein each of the said orientation means is provided with means for stably positioning around the said vertical axis, with respect to the aforementioned support, the said locator member, in a central position with the said shoulder piece 13b pointing downstream of the corresponding locator member 13a, with respect to the advancement motion of the orientation means 13, and in a position rotated by 90° clockwise or anti-clockwise, with respect to the preceding position.

6. Apparatus according to Claim 1, wherein the said second recognition station 70 is constituted by : a source of monochromatic light 22a that illuminates, through reflector mirrors 22' and 22", the two parts of the fruit opposite one another with respect to a vertical plane of symmetry comprising the said movement direction of the peach; a pair of elements 22c for detecting the intensity of the light on the faces of the fruit, placed on opposite sides thereto, designed to actuate the said routing device 25.

7. Apparatus according to Claim 1, wherein the said cam 24 is provided with a third groove 24a, placed along the rectilineal path of the said tail pieces 13d, and provided to couple these when the said second recognition station is taken out of operation.

8. Apparatus according to Claim 1, wherein the said third station is provided with a second cam 26 placed downstream of the cam 24 with respect to the advancement motion of the fruit, and provided to intercept a second tail piece 13e of the said arm 13c, with the consequent return of the orientation means to the central stable position thereof.

9. Apparatus according to Claim 1, wherein the said charging-separating device is constituted by : a hopper 7 in which the fruit is contained in bulk, provided with a grouping channel 8 that has, at the extremity thereof, a support member 8' that is concave, is of fork conformation, and supports one peach at a time; and a plurality of lifting forks 9 pivoted to an endless chain 10 and movable bet-

**0056790**

ween the said support member 8' and the said first station 60, each of the said forks being provided with a first tail piece 9a that intercalates vertically with the said support member 8', designed to pick the fruit up there from and to support it, and with a second tail piece 9b placed in abutment on a cam 11 that extends along the full path of the said chain.

10. Apparatus according to the preceding claim, wherein the said cam 11 is shaped, in the region of the initial section of the said first station 60, in such a way as to allow the said forks to undergo a rotation and, in consequence, the peach to be deposited on the peak of the said rollers 12.

## FIG 7

## FIG 1

FIG 11

FIG 3

FIG 2

**FIG5**

**FIG12**

FIG 8

a)

b)

c)

FIG 6

FIG 10

FIG 9

FIG4

FIG13

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 732 894 (KARBERG) *Page 5, last paragraph to page 6, first paragraph, figures 1,2* | 1 | B 65 B 35/58 A 23 N 3/00 |
| A | US-A-3 666 079 (FMC) *Column 2, lines 1-12; figures 1,6,7* | 1 | |

TECHNICAL FIELDS SEARCHED (Int. Cl. ³)

B 65 B
A 23 N

The present search report has been drawn up for all claims

| Place of search | Date of completion of the search | Examiner |
|---|---|---|
| THE HAGUE | 26-04-1982 | CLAEYS H.C.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82